**Europäisches Patentamt**

**European Patent Office**

**Office européen des brevets**

(19)

(11) Veröffentlichungsnummer : **0 148 404**
**B1**

(12)

# EUROPÄISCHE PATENTSCHRIFT

(45) Veröffentlichungstag der Patentschrift :
**25.05.88**

(21) Anmeldenummer : **84114682.2**

(22) Anmeldetag : **03.12.84**

(51) Int. Cl.⁴ : **G 21 C   3/32,** G 21 C 15/02

(54) **Fluessigkeitsgekuehlter Kernreaktor, insbesondere Siedewasserreaktor.**

(30) Priorität : **13.12.83 DE 3345099**

(43) Veröffentlichungstag der Anmeldung :
**17.07.85 Patentblatt 85/29**

(45) Bekanntmachung des Hinweises auf die Patenterteilung : **25.05.88 Patentblatt 88/21**

(84) Benannte Vertragsstaaten :
**CH DE FR LI SE**

(56) Entgegenhaltungen :
**EP-A- 0 036 142**
**EP-A- 0 054 827**
**DE-A- 3 216 657**
**FR-A- 1 299 400**
**GB-A- 2 054 247**
**US-A- 3 185 630**

(73) Patentinhaber : **Siemens Aktiengesellschaft Berlin
und München
Wittelsbacherplatz 2
D-8000 München 2 (DE)**

(72) Erfinder : **Batheja, Pramod, Dipl.-Ing.
Friedrich Bauer-Strasse 33
D-8520 Erlangen (DE)**
Erfinder : **Goetzmann, Claus, Dipl.-Ing.
Albert Rupp-Strasse 8
D-8520 Erlangen (DE)**
Erfinder : **Kumpf, Hermann, Dipl.-Ing.
Leerstetterstrasse 46
D-8501 Wendelstein (DE)**
Erfinder : **Rau, Peter, Dipl.-Ing (FH)
Mittelehrenbach Nr. 89
D-8551 Leutenbach (DE)**

EP 0 148 404 B1

## Beschreibung

Die Erfindung betrifft einen flüssigkeitsgekühlten Kernreaktor, insbesondere Siedewasserreaktor, gemäß Oberbegriff des Anspruchs 1.

Ein solcher Kernreaktor ist durch die FR-A-1 299 400 bekannt. Brennelementgruppen seines Kerns bilden Kernzellen, die jeweils von Blechschächten umfaßt werden.

Solche die in Form von Kernzellen angeordneten Brennelemente umfassende Blechschächte haben unter anderem den Vorteil, die Brennelemente gegen Querkräfte sicher abzustützen und die Kühlmittelströmung von unten nach oben durch Kaminwirkung zu unterstützen. Beim bekannten Kernreaktor sind die Absorberblätter der Steuerstäbe allerdings außerhalb der Blechschächte angeordnet ; sie werden innerhalb von Schlitzen einer oberen und einer unteren Kerngitterplatte in ihrer Längsrichtung geführt.

Der Erfindung liegt die Aufgabe zugrunde, ausgehend von einem flüssigkeitsgekühlten Kernreaktor der im Oberbegriff des Anspruchs 1 definierten Art, eine im Vergleich zum bekannten Kernreaktor verbesserte Führung und Halterung der Steuerstäbe zu erzielen.

Erfindungsgemäß wird die gestellte Aufgabe durch die im Kennzeichen des Patentanspruchs 1 angegebenen Merkmale gelöst. Vorteilhafte Weiterbildungen sind in den Patentansprüchen 2 bis 6 angegeben.

Die mit der Erfindung erzielbaren Vorteile sind vor allem darin zu sehen, daß die Steuerstäbe sowohl in ihrem eingefahrenen, als auch in ihrem ausgefahrenen Zustand und in Zwischenpositionen auf ihrer gesamten Länge an den Blechschächten geführt sind, wodurch der Kernreaktor auch im Bezug auf die Anordnung der Steuerstäbe besonders erdbebensicher ist. Die Integration des Steuerstabantriebes in die Blechschächte bedeutet eine Einsparung an Bauhöhe. Die mindestens um die Länge der Steuerstäbe über den Reaktorkern hinausragenden Blechschächte vergrößern die Kaminwirkung für die Kühlmittelströmung. Deshalb eignet sich die Erfindung besonders für Siedewasserreaktoren mit Naturumlauf, obwohl sich die Vereinfachung des Kernaufbaus auch bei anderen flüssigkeitsgekühlten Kernreaktoren mit Vorteil anwenden läßt.

Gemäß Patentanspruch 2 wirken die Zwischenbleche mit dem Steuerstab als Führung zusammen, wobei eine vorteilhafte Konstruktion dafür im Patentanspruch 3 angegeben ist. Eine besonders stabile Abstützung der Blechschächte untereinander erreicht man durch den Gegenstand des Patentanspruchs 4.

Der Gegenstand des Anspruchs 5 bietet die Möglichkeit, für die vier Brennelemente in einem Blechschacht einen gemeinsamen Wasserabscheider vorzusehen, oder aber für jedes Brennelement einen eigenen. Auf jeden Fall ist sichergestellt, daß die in dem Blechschacht einzige nach oben verlaufende Kühlmittelströmung nicht durch zurückfließendes Wasser aus den Wasserabscheidern behindert wird.

Kernreaktoren nach der Erfindung werden üblicherweise mit einem polygonalen Kernquerschnitt ausgeführt. Grundlage ist in der Regel das Quadrat, so daß auch der Querschnitt des Blechschachtes ein Quadrat ist. Durch den Gegenstand des Anspruchs 6 wird in diesem Zusammenhang das Umsetzen der Brennelemente beim Nachladen erleichtert, weil die umzusetzenden Brennelemente nicht mehr im Brennelement-Lagerbecken abgesetzt werden müssen.

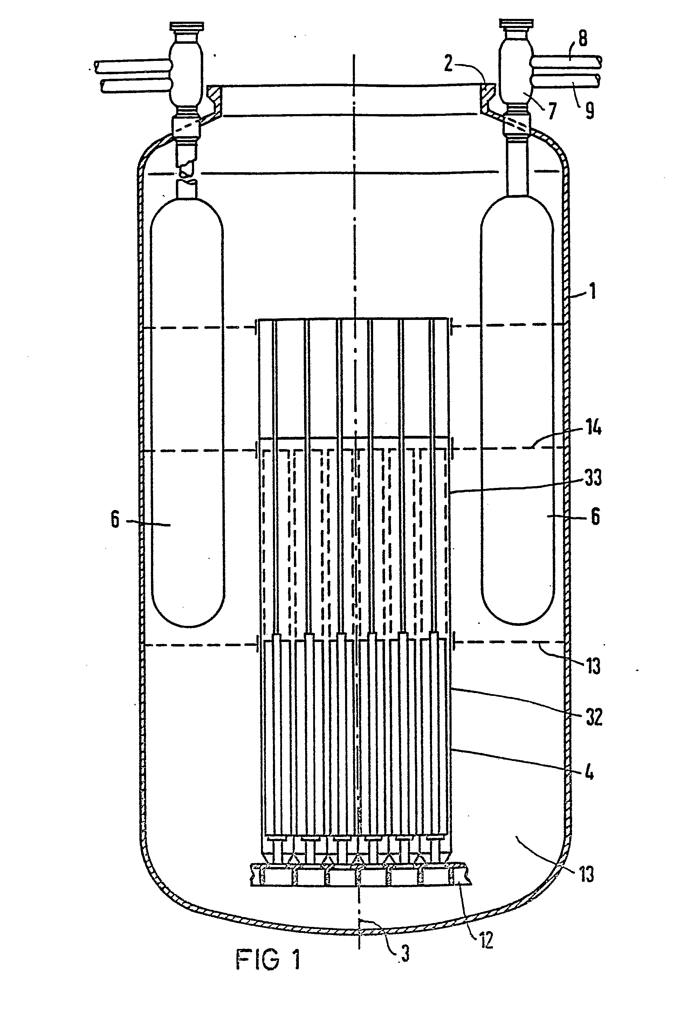

Zur näheren Erläuterung der Erfindung wird anhand der beiliegenden Zeichnung ein Ausführungsbeispiel beschrieben. Dabei zeigt die Fig. 1 den Kernreaktor nach der Erfindung in einem Vertikalschnitt, die Fig. 2 einen zugehörigen Horizontalschnitt, während in Fig. 3 in einer perspektivischen Darstellung ein Teil des Kernreaktors mit Schnitten gezeichnet ist. In den Fig. 4 bis 7 sind Ausführungsmöglichkeiten des Blechschachtes dargestellt. In den Fig. 8 und 9 sind Abstützungen der Blechschächte aneinander und die Unterbringung zusätzlicher Absorbermaterialien dargestellt. Die Fig. 10 und 11 zeigen die Anordnung von Wasserabscheidern an den Blechschächten.

Der dargestellte Kernreaktor ist ein als Siedewasserreaktor arbeitender Heizreaktor mit etwa 100 MW thermischer Leistung. Er umfaßt einen im wesentlichen zylindrischen Reaktordruckbehälter 1, dessen Durchmesser etwa 4 m und dessen Höhe bis zur Oberkante des Deckelflansches hin rund 8 m beträgt. Der Druckbehälter 1 enthält in seinem unteren Bereich in der Nähe der Behälterachse 3 einen Reaktorkern 4, der in bekannter Weise aus Brennelementen 5 mit einer aktiven Länge von 1,85 m und quadratischem Querschnitt zusammengesetzt ist.

Die im Kern 4 erzeugte Wärme wird vom Reaktorkühlmittel (Wasser von 200 °C und Sattdampf von 15 bar) über acht Wärmetauscher 6 abgeführt, die oberhalb des Reaktorkerns 4 in der Nähe der Wand des Reaktordruckbehälters 1 angeordnet sind. Die Wärmetauscher 6 sind über eine Durchführung 7 mit zwei konzentrischen Rohren mit einer Zuleitung 8 und einer Ableitung 9 für Sekundärkühlmittel versehen. Dies ist Druckwasser von 18 bar und 120 bzw. 160 °C.

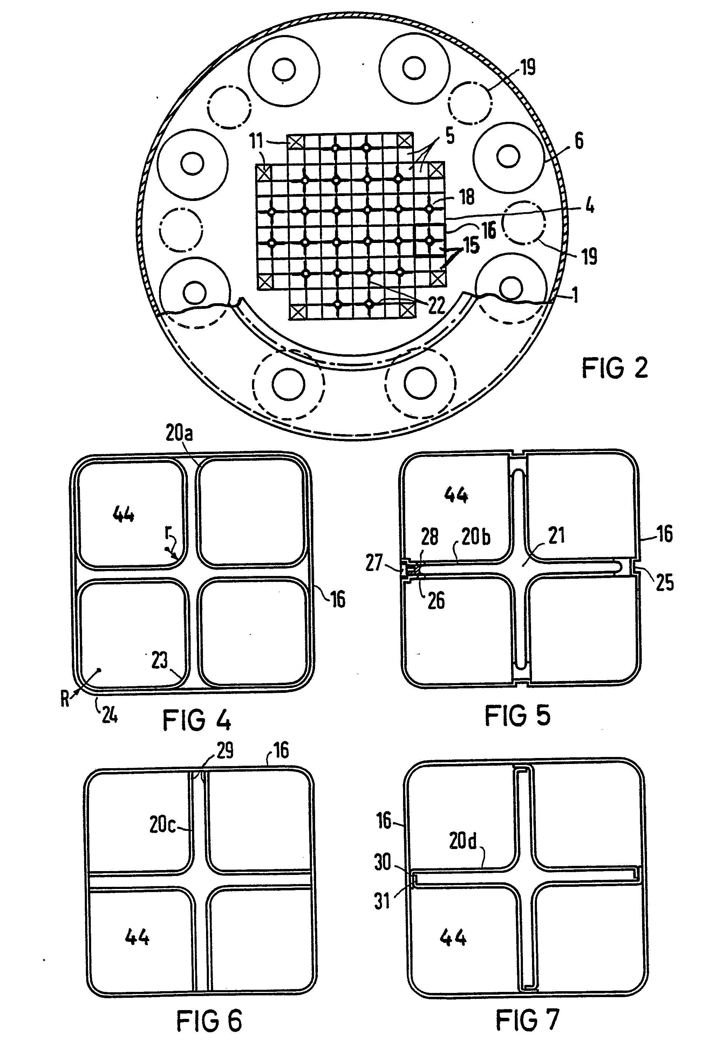

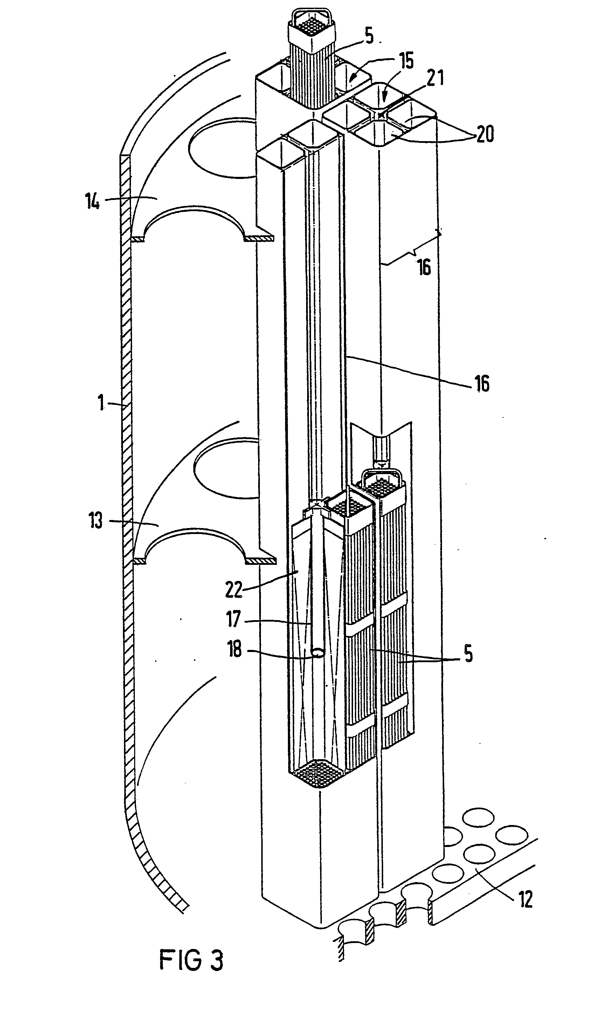

Der Reaktorkern 4 sitzt auf einer unteren Tragplatte 12. Sein seitlicher Halt ist vor allem durch nicht weiter dargestellte Stützbleche 13 und 14 bestimmt, die die aus Fig. 2 ersichtliche vieleckige Kontur des Kerns 4 festlegen. Innerhalb der Kontur ist der Kernquerschnitt durch Blechschächte 16 unterteilt, die einen quadratischen Querschnitt mit etwa 300 mm Kantenlänge aufweisen und Kernzellen 15 mit je vier Brennelementen 5 einschließen. Nur an den Ecken des Reaktorkerns 4 sind die Brennelementpositionen 11 unbesetzt.

Die Brennelemente 5 haben wiederum einen quadratischen Querschnitt und sitzen mit ihren den Blechschächten 16 zugekehrten Außenseiten am Rand der Blechschächte 16. Die anderen, inneren Seiten liegen an Zwischenblechen 20 an, die in die Blechschächte 16 eingesetzt sind. Die Zwischenbleche definieren einen kreuzförmigen Spalt 21 zur Aufnahme von Steuerstäben 22 und nicht gezeigten Antriebsgestängen bzw. Antrieben.

Die den Kernzellen 15 zugeordneten und von den Blechschächten 16 umschlossenen kreuzförmigen Steuerstäbe 22 sind baulich in die Blechschächte integriert. Dazu ist in der Mitte des Spaltes 21 ein Zylinder 17 vorgesehen, in dem ein mit dem Steuerstab 22 verbundener Druckmittelkolben 18 gleitet. Als Druckmittel dient das Kühlwasser des Reaktors, das in Behältern 19 zwischen den Wärmetauschern 6 unter erhöhtem Druck gesetzt wird. Die Druckleitungen sind der Übersichtlichkeit halber weggelassen.

In den Fig. 4 bis 7 sind verschiedene Möglichkeiten zur Anordnung der Zwischenbleche 20 dargestellt, die im folgenden durch Buchstaben unterschieden sind. In Fig. 4 sind die Zwischenbleche 20a als gleichmäßig um den ganzen Umfang reichende quadratische Hülle mit abgerundeten Ecken 23 ausgebildet. Der Abrundungsradius r der Ecken 23 ist so gewählt, daß er mit dem Abrundungsradius R an den Ecken 24 der Blechschächte 16 eine möglichst geschlossene Anlage ergibt. Dabei ist die Kantenlänge des quadratischen Querschnittes der Hüllen 20a 140 mm, während die äußere Kantenlänge der Blechschächte 16 etwa 300 mm beträgt.

Bei dem Ausführungsbeispiel nach Fig. 5 ist der Blechschacht 16 im mittleren Bereich bei 25 eingezogen. Dort ist ein massives Verbindungsstück 26 mit einer Schraube 27 befestigt, das mit zwei hörnerartigen Vorsprüngen 28 in das Zentrum eines Blechschachtes 16 ragt. An den Vorsprüngen sind Winkelstücke als Zwischenbleche 20b angeschweißt, die den für die Brennelemente vorgesehenen quadratischen Querschnitt von dem zentralen kreuzförmigen Zwischenraum 21 trennen.

Bei dem Ausführungsbeispiel nach Fig. 6 sind die rechtwinkligen Zwischenbleche 20c mit etwas längeren Schenkeln ausgeführt. Die freien Enden 29 der Schenkel stoßen stumpf auf die Innenseite des Blechschachtes 16, so daß dort nicht nur eine Befestigung zum Beispiel durch Schweißen oder Löten sondern auch ein lokales Einfügen möglich ist.

Bei dem Ausführungsbeispiel nach Fig. 7 sind die Winkel 20d an ihren Schenkeln mit abgewinkelten Lappen 30 und 31 versehen. Diese können aneinander und an dem Blechschacht 16 zur Anlage gebracht und in einem gleichzeitigen Schweißvorgang durch Punktschweißen befestigt werden.

Die Blechschächte 16 bestehen ebenso wie die Zwischenbleche 20 im Bereich des Reaktorkerns 4, also etwa als Teil 32 unterhalb des Stützbleches 13, aus einer Zirkonlegierung. Der darüberliegende Teil 33 kann dagegen aus nichtrostendem Stahl hergestellt werden.

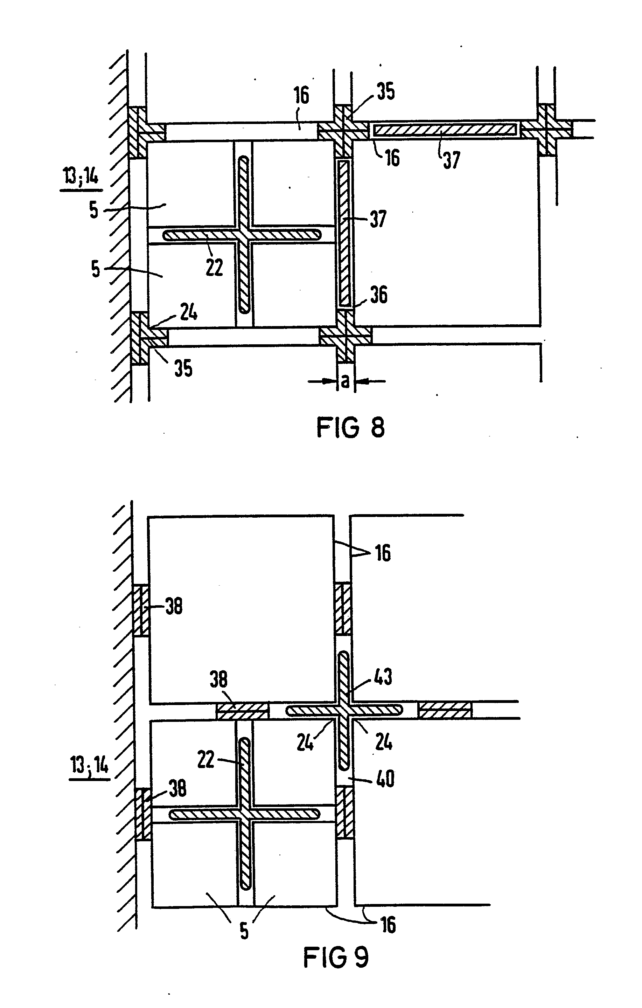

In Fig. 8 ist zu sehen, daß die Blechschächte 16 an den Ecken 24 mit Winkelstücken 35 versehen sind, die Vorsprünge bilden und als Gleitschuhe eine wechselseitige Anlage benachbarter Blechschächte 16 ergeben. Sie sorgen für einen Abstand a von etwa 10 mm zwischen benachbarten Blechschächten 16. Der Zwischenraum 36 kann entsprechend kernphysikalischen Erfordernissen zum Beispiel einen Absorber, einen besonderen Moderator oder dergleichen aufnehmen, der vorzugsweise in Form von Platten 37 eingesetzt wird. Wenn keine Einlagen benötigt werden, kann der Zwischenraum 36 auch extrem gering ausgeführt werden, um im Kern 4 wenig moderierendes Wasser zu haben.

Bei der Ausführungsform nach Fig. 9 sind die Blechschächte 16 mit flachen, vorzugsweise angeschrägten Gleitschuhen 38 aneinander abgestützt, die in der Mitte der Schachtwände angebracht sind. Deswegen ergibt sich ein freier Zwischenraum 40 mit Kreuzquerschnitt im Bereich der Ecken 24 benachbarter Blechschächte 16. In dem kreuzförmigen Zwischenraum 40 zwischen den Blechschächten 16 ist ein kreuzförmiger Zusatzabsorber 43 untergebracht. Der Zusatzabsorber kann bei Bedarf beweglich angeordnet sein. Mindestens ist ein Herausziehen möglich, wenn der Kern einen entsprechenden Reaktivitätsabbau erfahren hat.

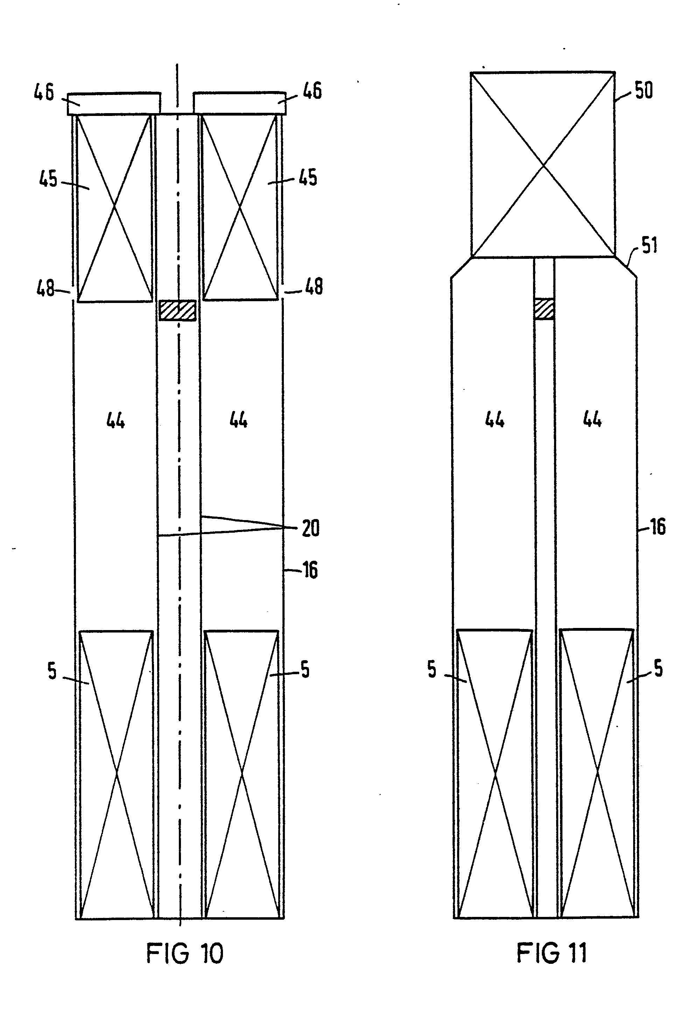

Die Darstellung nach Fig. 10 zeigt für einen verkürzt gezeichneten Blechschacht 16 in einem Vertikalschnitt, daß am unteren Ende die Brennelemente 5 angeordnet sind. Sie sitzen mit so viel Spiel zwischen dem Blechschacht 16 und den Zwischenblechen 20, daß sie mit einer Lademaschine ohne die Schächte 16 aus dem Reaktordruckbehälter bewegt werden können. Die Schächte 16 bilden dabei lediglich Kanäle 44 für jedes Brennelement 5. Es ist lediglich erforderlich, daß der Zugang freigemacht wird, der durch Wasserabscheider 45 verstellt ist, die mit einem Tragflansch 46 am oberen Ende der Blechschächte 16 abgestützt sind. Jeder der Abscheider 45 ist für den ein Brennelement 5 aufnehmenden Kanal 44 vorgesehen. Dabei ist im Blechschacht 16 an der Unterseite der Abscheider 45 eine Öffnung 48 vorgesehen, die als Wasserauslaß dient. Die Abscheider 45 können zum Beispiel als Zentrifugenabscheider ausgebildet sein.

Bei der in Fig. 11 dargestellten Alternative ist für die vier Brennelemente 5 in einem Blechschacht 16 ein gemeinsamer Abscheider 50 vorgesehen. Sein Querschnitt ist etwas kleiner als der Querschnitt des Blechschachtes 16. Deshalb rinnt das am unteren Ende des Abscheiders 50 austretende Wasser über eine Schräge 51 zur Außenseite des Blechschachtes 16. Die Schräge 51 muß mit dem Abscheider 50 abgehoben werden, damit die Kanäle 44 für das in Fig. 3 für ein Brennelement 5 dargestellte Ziehen frei sind.

Wenn die Abscheider 45, 50 beim Brennelementwechsel abgenommen werden, um Zugang zu den Brennelementen 5 zu schaffen, kann zum Beispiel auch der oberste Teil der Blechschächte 16 abgenommen werden, denn eine solche Unterteilung in Längsrichtung kann im Hinblick auf die Hantierbarkeit der Blechschächte 16 und ihre Unterbringung in einem abschirmenden Wasserbecken zweckmäßig sein.

## Patentansprüche

1. Flüssigkeitsgekühlter Kernreaktor, insbesondere Siedewasserkernreaktor, mit einem Reaktordruckbehälter (1) und einem darin angeordneten Reaktorkern (4), bestehend aus Brennelementen (5), die — zu Kernzellen (15) gruppiert — mit in vertikaler Richtung angeordneten und bewegbaren, Absorbermaterial enthaltenden Steuerstäben und zugehörigen Antrieben (17, 18) zusammenarbeiten, wobei den Kernzellen (15) jeweils ein Blechschacht (16) zugeordnet ist, welcher über den Reaktorkern hinausragt, den gleichen Querschnitt wie die Kernzelle hat und Kanäle (44) zum Ein- und Ausladen der Brennelemente (5) bildet, dadurch gekennzeichnet, daß der jeweilige Blechschacht (16) um mindestens die Länge des Steuerstabes (22) über den Reaktorkern (4) hinausragt und den Antrieb (17, 18) für den Steuerstab (22) einschließt.

2. Kernreaktor nach Anspruch 1, wobei der Blechschacht (16) durch Zwischenbleche (20) in Teilquerschnitte (44) von der Größe der Querschnitte der einzelnen Brennelemente (5) unterteilt ist, dadurch gekennzeichnet, daß der Steuerstab (22) an den Zwischenblechen (20) geführt ist.

3. Kernreaktor nach Anspruch 2, dadurch gekennzeichnet, daß die Zwischenbleche (20) als Winkelstück ausgebildet sind, das mit dem freien Ende seiner Schenkel am Blechschacht (16) befestigt ist.

4. Kernreaktor nach einem der Ansprüche 1 bis 3, dadurch gekennzeichnet, daß auf der Außenseite der Blechschächte (16) angebracht sind : Gleitschuhe (38) in der Mitte der Schachtwand und/oder Eckvorsprünge (35), an denen die Blechschächte (16) aneinander und an einer Kernumfassung (13, 14) abgestützt sind.

5. Kernreaktor nach einem der Ansprüche 1 bis 4, dadurch gekennzeichnet, daß der Blechschacht (16) einen Wasserabscheider (45) trägt, und daß der Blechschacht (16) eine Öffnung (48) aufweist, durch die das abgeschiedene Wasser zur Außenseite des Blechschachtes (16) austritt.

6. Kernreaktor nach einem der Ansprüche 1 bis 5, mit einem polygonalen Kernquerschnitt, dadurch gekennzeichnet, daß eine in den Ecken des Kernquerschnitts gelegene Brennelementposition (11) unbesetzt ist.

## Claims

1. A liquid-cooled nuclear reactor, in particular a boiling-water nuclear reactor, having a reactor pressure vessel (1) and a reactor core (4) arranged inside it, and consisting of fuel elements (5), which — grouped into core cells (15) — operate together with control rods arranged and movable in a vertical direction and which contain absorber material and with drives (17, 18) belonging thereto, where each core cell (15) is allotted a sheet-metal shaft (16) which projects above the reactor core, has the same cross-section as the core cell and forms channels (44) for loading and unloading the fuel elements (5), characterised in that each sheet-metal shaft (16) projects above the reactor core (4) by at least the length of the control rod (22) and encloses the motor (17, 18) for the control rod (22).

2. A nuclear reactor as claimed in Claim 1, in which the sheet-metal shaft (16) is divided by sheet-metal partitions (20) into partial cross-sections (44) of the size of the individual fuel elements (5), characterised in that the control rod (22) is guided at the sheet-metal partitions (20).

3. A nuclear reactor as claimed in Claim 2, characterised in that the partitions (20) are formed as an angle piece, which is fastened to the sheet-metal shaft (16) at the free edges of its limbs.

4. A nuclear reactor as claimed in one of Claims 1 to 3, characterised in that there are mounted on the outer side of the sheet-metal shafts : guide shoes (38) in the middle of the shaft wall and/or corner projections (35), on which the sheet-metal shafts (16) are supported against each other and against a core surrounding member (13, 14).

5. A nuclear reactor as claimed in one of Claims 1 to 4, characterised in that the sheet-metal shaft (16) carries a water extractor (45) ; and that the sheet-metal shaft (16) has an opening (48) through which the water extracted discharges to the exterior of the sheet-metal shaft (16).

6. A nuclear reactor as claimed in one of Claims 1 to 5, having a polygonal core cross-section, characterised in that a fuel element position (11) situated in the corners of the core cross-section, is left vacant.

## Revendications

1. Réacteur nucléaire à refroidissement par du liquide, notamment réacteur nucléaire à eau bouillante, comprenant une cuve de réacteur sous pression (1), et un coeur de réacteur (4) qui y est logé et qui est constitué d'assemblages combustibles (5) qui, groupés en cellules de coeur, coopèrent avec des barres de commande, disposées suivant la direction verticale, mobiles et contenant du matériau absorbant et avec des dispositifs d'entraînement qui en font partie, un boîtier-canal (16), qui dépasse du coeur de réacteur, qui a la même section transversale que les cellules de coeur et qui forme des canaux (44) de chargement et de déchargement des assemblages combustibles (5), étant associé aux cellules de coeur (15), caractérisé en ce que chaque boîtier-canal (16) dépasse du cœur de réacteur (4) d'au moins la longueur de la barre de commande (22) et entoure le dispositif d'entraînement (17, 18) de la barre de commande (22).

2. Réacteur nucléaire suivant la revendication 1, dans lequel le boîtier-canal (16) est subdivisé par des tôles intermédiaires (20) en sections transversales partielles (44) de la dimension des sections transversales des assemblages combustibles (5) individuels, caractérisé en ce que la barre de commande (22) est guïdée sur des tôles intermédiaires (20).

3. Réacteur nucléaire suivant la revendication 2, caractérisé en ce que les tôles intermédiaires (20) sont constituées sous la forme d'une pièce coudée qui est fixée par l'extrémité libre de sa branche, au boîtier-canal (16).

4. Réacteur nucléaire suivant l'une des revendications 1 à 3, caractérisé en ce que, du côté extérieur des boîtiers-canaux (16) sont fixés : des sabots de glissement (38) au milieu de la paroi du boîtier-canal et/ou des saillies de sommet (35) par lesquels les boîtiers-canaux (16) viennent en appui les uns contre les autres et contre un dispositif de délimitation du coeur (13, 14).

5. Réacteur nucléaire suivant l'une des revendications 1 à 4, caractérisé en ce que le boîtier-canal (16) porte un séparateur d'eau (15) et en ce que le boîtier-canal (16) comporte une ouverture (48) par laquelle l'eau est séparée du côté extérieur du boîtier-canal (16).

6. Réacteur nucléaire suivant l'une des revendications 1 à 5, dont le coeur a une section transversale polygonale, caractérisé en ce qu'une position d'assemblage combustible (11), aux sommets de la section transversale du cœur, est inoccupée.

FIG 1

0 148 404

FIG 2

FIG 4

FIG 5

FIG 6

FIG 7

2

FIG 3

FIG 8

FIG 9

FIG 10

FIG 11